# EUROPEAN PATENT SPECIFICATION

(11) **EP 3 981 230 B1**
(45) Date of publication and mention of the grant of the patent: **21.08.2024**
(21) Application number: 20200634.2
(22) Date of filing: 07.10.2020
(51) Int. Cl.: A01B 15/06, A01B 23/02, F16B 39/24, F16B 43/00

(54) **TINE WASHER**
UNTERLEGSCHEIBE FÜR ZINKEN
RONDELLE À DENTS

(43) Date of publication of application: 13.04.2022
(73) Proprietor: Wox Agri Services Ltd, Stannington, Morpeth NE61 6NQ (GB)
(72) Inventor: WOX, Geoffrey, Morpeth, NE61 1NQ (GB)
(74) Representative: Loven, Keith James

(56) References cited:
- EP-A1- 1 283 373
- WO-A1-2014/149508
- DE-U1- 202017 106 759
- JP-U- S5 615 819
- KR-B1- 101 983 705
- RU-C1- 2 112 332

## Description

### Field of the Invention

The present invention relates to washers, particularly washers for use with an earth working tine.

### Background to the Invention

Agricultural machines that work the earth often use tines to engage the earth. As the tractor pulls the device holding the tines through the earth the earth is broken apart sufficiently to create an adequate soil bed for seeding or to up-root weeds. Tines commonly have points attached to the part of the tine which is engaged with the soil in use. Points are wear parts and are designed to wear and be replaced without damaging the tine which holds them. To attach the point to the front of the tine, typically one or more bolts are used which engage through the point and then through the tine. The points are held in place by a nut which is screwed onto the rear exposed end of the bolt. The bolt and nut is then tightened thereby clamping the point to the tine.

In attempts to prevent the points from shifting position in use, the rear of the point might be formed into a channel and the front of the tine is formed into a matching ridge. When the two are engaged the point is prevented from twisting on the tine. To keep the material tine springy and for ease of manufacture it is typical for the rear of such tines to match the front of the tine, that is to say it will have a channel recess running down the length of its rear near the base of the tine where the point fits.

However, this arrangement is not satisfactory. Even when the nuts are tightened very tightly or when conventional flat washers are used to spread the load, the fact that the bearing surface underneath the nut or washer is limited in area means that the connection between the nut and the rear of the tine can become loose over time. There is also considerable twisting force put on the tine which is transferred through to the nut and convention washer at the rear of the tine. The nuts inevitably come loose and in so doing the washers start to rotate, causing further wear on the nut and back of the tine. Thus, the bolt becomes loose and the point is allowed to move at the front of the tine. Continued work with the tine and point further exacerbates this. Once the connection is loose, the bolt can also move within the opening of the tine through which it extends. This allows the point to move off centre either up or down, left or right even more. The point can then become very loose and can move about to the extent that it breaks off completely in use. This damages the tine and the desired earth working effect is lost.

Prior art acknowledged herein includes:
JPS5615819 and WO0188391 which both disclose a toothed washer to prevent nuts and bolts loosening during vibration, KR101983705 which discloses a connecting member for structural and earthquake resistant design, WO2014149508 which discloses an adjustable bonding washer for placement between two metal pieces, DE202017106759 which discloses a fastening system for a wearing part of a soil treatment device, and RU2112332 which discloses a cultivator working tool.

There has now been devised a washer which substantially overcomes and/or mitigates the above referenced and/or other disadvantages associated with the prior art.

### Summary of the Invention

In an aspect of the invention there is provided the use of a washer as claimed in claim 1.

The washer according to the invention is advantageous primarily because the protrusions engage within the channel recess at the rear of a typical earth working tine. This prevents the washer from turning at the rear of the tine. Another surprising effect of the invention is that when the protrusions extend into the channel recess, they function to limit the movement of the bolt within the opening formed in the tine through which the bolt extends. The end result of using the washer is that the bolt and nut holds the tine and point in a clamping engagement much more positively and for a surprising amount longer than with conventional fixings. This lengthens the effective working time of the points.

The plate has two opposing faces and may have one or more edges separating the two faces that extend around the perimeter of the plate. For example, if the plate is circular then it will have one edge extending around the circumference of the plate. A square plate will have four edges. A plane runs through the plate parallel to either face. In the context of the invention upstanding from the face of the plate means out of said plane.

The opening may be located at any position on the plate, but preferably, the opening is located in the centre of each face of the plate. This has the effect that the bolt engages through the centre of the plate and therefore when the nut is tightened thereto equal forces all around the washer are experienced. It also means that the bolt is held centrally with respect to the washer and the tine to which it is attached.

The protrusions are designed to engage the channel recess of the tine to which the washer is in contact with in use. Preferably the protrusions are upstanding at an angle of between approximately 80 degrees and approximately 100 degrees to the plate. More preferably the protrusions are upstanding at an angle of approximately 90 degrees to the plate. This has the effect that the protrusions have the greatest penetration into the channel recess of the tine in use.

The protrusions can be any shape. The protrusions may have sides which match the sides of the channel recess of the tine in use. For example, if the channel recess is substantially 'U' shaped then the sides of the protrusions will be correspondingly curved to match the sides of the 'U'. The same is true if the channel recess is substantially 'V' shaped. Preferably the sides of each protrusion farthest from the line dissecting the opening converge towards one another. This means that the outward sides of the protrusions engage tightly with the sides of the channel recess of the tine in use and further add to the inability of the washer to move in use, and therefore the bolt engaged through the opening.

The washer may be formed by moulding of the plate the protrusions, as a single piece, for example by injection moulding, stamp moulding or casting. Preferably, at least one of the protrusions is integral with the plate. This has the effect to reduce manufacturing costs, increase strength of the washer and increase manufacturing speed.

The protrusions can be positioned at any place around the face of the plate. Preferably, at least one of the protrusions is positioned at the perimeter of the face of the plate. The closer to the edge of the plate the protrusion is the stronger the engagement of the washer within the channel recess and therefore the more positive the engagement between the nut, bolt and tine exists.

To improve manufacturing speed and reduce manufacturing costs and improve washer strength, preferably, the washer is formed as a blank and the protrusions are bent towards one another prior to use at bend lines defined by the line where the plate meets the protrusions. Thus, the washer is made out a single piece of material and the only manufacturing required is in the cutting of the blank and the bending.

As mentioned above the protrusions can be any shape. Given that the channel recess in the tine may not be uniform or may be wider in one position than the other, it will be beneficial to have protrusions which match the recess. Another way to allow for changing recess shape, without increasing manufacturing costs is to alter the angle that the protrusions are positioned on the line, or their width. For example, one protrusion may be orientated at right angles to the line and the other of similar width but oriented oblique to the line. This means that the washer can fit snugly into a channel recess that is tapering. Preferably though, the base of each protrusion is elongate or square, and each protrusion has parallel sides which run at right angles to the line. For uniform channel recesses this has the effect of creating a strong engagement between the protrusions and the side of the recess, to further prevent movement of the washer or the bolt. Indeed, in some circumstances it is preferable that the base of each protrusion is elongate or square, and the equivalent sides on each protrusion run parallel to one another. This allows for both protrusions to be oriented at angles with respect to the line and effectively engage at a slanting angle within the recess. This has the effect of preventing movement of the bolt and washer in one direction more that the other.

Tines and points vary greatly. There may be numerous bolts engaged through the tines and points. To accommodate this, preferably there are two or more openings, with each opening for engagement of a bolt therethrough and the protrusions being positioned on a line which dissects the centre of at least one of the openings.

The washer may be made of any rigid or hard material. This is so that it can carry the strength required when the nut is tightened. Preferably the washer is made of metal.

The washer according to the invention is attached to a tine therefore there is provided an earth working tine comprising the washer as described above.

The invention will not be described by way of example only, with reference to the illustrations in which like numerals represent like parts and in which:

### Brief Description of the Drawings

Figure 1 shows a perspective view of an embodiment of the washer and
Figure 2 shows a perspective view of the washer as shown in figure 1 engaged with the rear of an earth working tine.

### Detailed Description of the Illustrated Embodiment

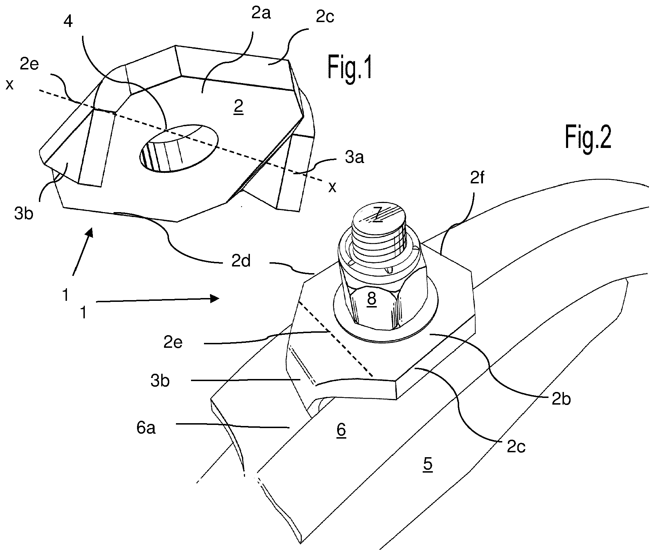

In Figure 1 there is shown a perspective view of an embodiment of the washer generally designated 1. The washer 1 comprises a plate 2 and two pointed protrusions 3a, 3b. The washer 1 is made from steel and is a single part structure manufactured from a flat blank which is then bent into shape. The plate 2 has two opposing faces 2a and 2b. Face 2a is intended as an inwardly engaging face. It is the face intended to engage against the rear of a tine 6 (shown in Figure 2) in use. The face 2b is intended as an outward face intended for engagement of a nut 8 (shown in Figure 2) in use. The plate 2 has an opening 4 which extends through the plate 2 from one face 2a to the other face 2b. The opening 4 is central of the plate 2. The plate 2 shown is generally square. Edges 2c and 2d of the plate 2 oppose one another and do not have any protrusions on. The protrusions 3a and 3b are bent from a flat blank initially and therefore effectively extend from the remaining edges 2e and 2f of the plate 2. The edges 2e and 2f therefore form bend lines for the protrusions 3a and 3b.

In another example of the invention there is provided a washer 1 as described above, but instead of the washer 1 being formed from a blank it is moulded from molten steel and cast into the shape shown. Therefore, there is no bend line per se, but the protrusions 3a and 3b might still be described as extending from the edges 2e and 2f.

In another example of the invention there is provided a washer 1 as described above, but instead of the washer 1 being formed from a blank, or having the protrusions 3a and 3b extending from the edges 2e and 2f, the washer 1 is moulded from molten steel and cast into a shape where the protrusions 3a and 3b extend from the face 2a in the same direction as shown in figure 1 and where the protrusions 3a and 3b are in contact with the perimeter of the face 2a. Therefore, there is no bend line per se.

In another example of the invention there is provided a washer 1 as described above, but the protrusions 3a and 3b are made as separate parts to the plate 2 and welded to the plate 2 before use, either extending from the edge or from the face.

In all the examples described the protrusions 3a and 3b are pointed and have inclined sides. In other examples the protrusions 3a and 3b have inclined sides but instead of being pointed just have a bevelled tip to them. The protrusions 3a and 3b may also be just spherical extensions from the face 2a to fit with the recess 6a in use.

The protrusions 3a and 3b are each positioned on a dissecting line x-x which dissects through the centre of the opening 4.

Each protrusion 3a, 3b is upstanding at 90 degrees to the plate 2. This means that when the plate 2 is laid with the face 2b downward, the protrusions 3a and 3b both extend upwards.

The plate 2 is generally flat and has two flat faces 2a and 2b. This improves grip with the tine 6 and the nut 8 respectively.

In use a point 5 is held against the front part of an earth working tine 6. In the example shown the tine 6 and point 5 are for an agricultural cultivator. The tine 6 has a rearward channel recess 6a which is 'V' shaped and the protrusions 3a and 3b shown in the example are shaped to match this recess 6a. A bolt 7 is inserted through the point 5 and the tine 6 and the washer 1 is then placed over the end of the bolt 7 through the opening 4, with the protrusions 3a and 3b allowed to sit within the recess 6a. A nut 8 is then screwed onto the end of the bolt 7 and tightened thereto. The tightening of the nut 8 and bolt 7 together clamps the point 5 to the tine 6 and the washer 1 to the rear of the tine 6. The protrusions 3a and 3b sit within the recess 6a, and during tightening of the nut 8 the protrusions 3a and 3b prevent the washer 1 from turning. Therefore, a much greater clamping force can be put on the engagement than with conventional fixings. During use of the tine 6 and point 5 within the soil there is great force put on the point 5 to move it with respect to the tine 6. The washer 1 prevents this as the bolt 7 is held centrally and this therefore prevents the point 5 from twisting or moving at the front of the tine 6. The nut 8 is therefore less likely to become lose and therefore the whole arrangement of the point 5, tine 6, washer 1, nut 8 and bolt 7 lasts considerably longer than with conventional equivalents.

In another example of the invention (not illustrated) the washer 1 is used in a tine drill coulter. The washer 1 is sandwiched between the rear of an agricultural tine 6 and a seed delivery tube. At the front of the tine there is a coulter tip which is held against the front of the tine by a bolt which extends through the tip and the tine. The washer 1 then fits over the exposed end of the bolt at the rear of the tine, followed by the seed delivery tube. A nut is applied to the exposed free end of the bolt and the tightened so as to tighten the point/tip, tine, washer and seed tube all together. Tine drill coulters are commonly used in agriculture and the washer 1 used therein prevents the tip from shifting position during use. The inventors have also strikingly found that use of the washer 1 enables the seed tube to be held more firmly at the rear of the tine, and therefore it is more likely to follow the tip and not be broken off during use due to deflection brought about by a lose connection.

## Claims

1. Use of a washer together with an earth working tine (6), the washer (1) engaging with the rear of the earth working tine (6) having a channel recess, the washer (1) being manufactured from a single part and comprising a substantially flat plate (2) having two opposing faces (2a, 2b) and with an opening (4) for engagement of a bolt (7) therethrough, wherein the plate (2) comprises two protrusions (3a, 3b), the protrusions (3a, 3b) being positioned on a line which dissects the centre of the opening (4) and positioned on opposite sides of the opening (4), the protrusions (3a, 3b) being upstanding from the same face of the plate, wherein, in use, the protrusions (3a, 3b) engage with the channel recess of a tine (6) to which the washer (1) is in contact with.

2. Use of a fr washer according to claim 1, wherein the opening (4) is located in the centre of each face (2a, 2b) of the plate (2).

3. Use of a washer according to claim 1 or claim 2, wherein the protrusions (3a, 3b) are upstanding at an angle of between approximately 80 degrees and approximately 100 degrees to the plate (2).

4. Use of a washer according to any preceding claim, wherein the sides of each protrusion (3a, 3b) farthest from the line dissecting the opening (4) converge towards one another.

5. Use of a washer according to any preceding claim, wherein at least one of the protrusions (3a, 3b) is integral with the plate (2).

6. Use of a washer according to any preceding claim, where at least one of the protrusions (3a, 3b) is positioned at the perimeter of the face of the plate (2).

7. Use of a washer according to any preceding claim, wherein the washer (1) is formed as a blank and the protrusions (3a, 3b) are bent towards one another prior to use at bend lines defined by the line where the plate (2) meets the protrusions (3a, 3b).

8. Use of a washer according to any preceding claim, wherein the base of each protrusion (3a, 3b) is elongate or square, and each protrusion (3a, 3b) has parallel sides which run at right angles to the line.

9. Use of a washer according to any preceding claim, wherein the base of each protrusion (3a, 3b) is elongate or square, and the equivalent sides on each protrusion (3a, 3b) run parallel to one another.

10. Use of a washer according to any preceding claim, wherein there are two or more openings (4), with each opening (4) for engagement of a bolt (7) therethrough and the protrusions (3a, 3b) being positioned on a line which dissects the centre of at least one of the openings (4).

11. Use of a washer according to any preceding claim, wherein the washer (1) is made of metal.

12. An earth working tine comprising a washer (1) engaging with the rear of the earth working tine (6) having a channel recess, the washer (1) being manufactured from a single part and comprising a substantially flat plate (2) having two opposing faces (2a, 2b) and with an opening (4) for engagement of a bolt (7) therethrough, wherein the plate (2) comprises two protrusions (3a, 3b), the protrusions (3a, 3b) being positioned on a line which dissects the centre of the opening (4) and positioned on opposite sides of the opening (4), the protrusions (3a, 3b) being upstanding from the same face of the plate, wherein the protrusions (3a, 3b) engage with the channel recess of a tine (6) to which the washer (1) is in contact with.

## Revendications

1. - Utilisation d'une rondelle conjointement avec une dent de terrassement (6), la rondelle (1) s'engageant avec l'arrière de la dent de terrassement (6) ayant un évidement en canal, la rondelle (1) étant fabriquée à partir d'une seule pièce et comprenant une plaque sensiblement plate (2) ayant deux faces opposées (2a, 2b) et avec une ouverture (4) pour l'engagement d'un boulon (7) à travers celle-ci, la plaque (2) comprenant deux saillies (3a, 3b), les saillies (3a, 3b) étant positionnées sur une ligne qui coupe le centre de l'ouverture (4) et positionnées sur des côtés opposés de l'ouverture (4), les saillies (3a, 3b) s'élevant à partir de la même face de la plaque et, en utilisation, les saillies (3a, 3b) s'engageant avec l'évidement en canal d'une dent (6) avec laquelle la rondelle (1) est en contact.

2. - Utilisation d'une rondelle selon la revendication 1, dans laquelle l'ouverture (4) est située au centre de chaque face (2a, 2b) de la plaque (2).

3. - Utilisation d'une rondelle selon la revendication 1 ou la revendication 2, dans laquelle les saillies (3a, 3b) s'élèvent à un angle compris entre environ 80 degrés et environ 100 degrés par rapport à la plaque (2).

4. - Utilisation d'une rondelle selon l'une quelconque des revendications précédentes, dans laquelle les côtés de chaque saillie (3a, 3b) les plus éloignés de la ligne coupant l'ouverture (4) convergent l'un vers l'autre.

5. - Utilisation d'une rondelle selon l'une quelconque des revendications précédentes, dans laquelle au moins une des saillies (3a, 3b) est solidaire de la plaque (2) .

6. - Utilisation d'une rondelle selon l'une quelconque des revendications précédentes, dans laquelle au moins une des saillies (3a, 3b) est positionnée au périmètre de la face de la plaque (2).

7. - Utilisation d'une rondelle selon l'une quelconque des revendications précédentes, dans laquelle la rondelle (1) est réalisée sous la forme d'un flan et les saillies (3a, 3b) sont pliées l'une vers l'autre avant utilisation à des lignes de pliage définies par la ligne où la plaque (2) rencontre les saillies (3a, 3b).

8. - Utilisation d'une rondelle selon l'une quelconque des revendications précédentes, dans laquelle la base de chaque saillie (3a, 3b) est allongée ou carrée, et chaque saillie (3a, 3b) a des côtés parallèles qui s'étendent à angle droit par rapport à la ligne.

9. - Utilisation d'une rondelle selon l'une quelconque des revendications précédentes, dans laquelle la base de chaque saillie (3a, 3b) est allongée ou carrée, et les côtés équivalents sur chaque saillie (3a, 3b) sont parallèles l'un à l'autre.

10. - Utilisation d'une rondelle selon l'une quelconque des revendications précédentes, dans laquelle il y a au moins deux ouvertures (4), chaque ouverture (4) étant destinée à l'engagement d'un boulon (7) à travers celle-ci et les saillies (3a, 3b) étant positionnées sur une ligne qui coupe le centre d'au moins une des ouvertures (4) .

11. - Utilisation d'une rondelle selon l'une quelconque des revendications précédentes, dans laquelle la rondelle (1) est faite de métal.

12. - Dent de terrassement comprenant une rondelle (1) s'engageant avec l'arrière de la dent de terrassement (6) ayant un évidement en canal, la rondelle (1) étant fabriquée à partir d'une seule pièce et comprenant une plaque sensiblement plate (2) ayant deux faces opposées (2a, 2b) et avec une ouverture (4) pour l'engagement d'un boulon (7) à travers celle-ci, la plaque (2) comprenant deux saillies (3a, 3b), les saillies (3a, 3b) étant positionnées sur une ligne qui coupe le centre de l'ouverture (4) et positionnées sur des côtés opposés de l'ouverture (4), les saillies (3a, 3b) s'élevant à partir de la même face de la plaque, les saillies (3a, 3b) s'engageant avec l'évidement en canal d'une dent (6) avec laquelle la rondelle (1) est en contact.

## Patentansprüche

1. Verwendung einer Unterlegscheibe zusammen mit einem Erdbearbeitungszinken (6), wobei die Unterlegscheibe (1) mit der Rückseite des Erdbearbeitungszinkens (6), welche eine furchenartige Ausnehmung aufweist, in Eingriff steht, wobei die Unterlegscheibe (1) aus einem einzigen Teil hergestellt ist und eine im Wesentlichen flache Platte (2) mit zwei gegenüberliegenden Flächen (2a, 2b) und mit einer Öffnung (4) für den Eingriff eines Bolzens (7) durch diese hindurch umfasst, wobei die Platte (2) zwei Vorsprünge (3a, 3b) aufweist, wobei die Vorsprünge (3a, 3b) auf einer Linie, die die Mitte der Öffnung (4) schneidet, positioniert sind und auf gegenüberliegenden Seiten der Öffnung (4) positioniert sind, wobei die Vorsprünge (3a, 3b) von derselben Fläche der Platte abstehen, wobei, im Gebrauch, die Vorsprünge (3a, 3b) mit der furchenartigen Ausnehmung eines Zinkens (6) in Eingriff stehen, mit dem die Unterlegscheibe (1) in Kontakt ist.

2. Verwendung einer Unterlegscheibe nach Anspruch 1, wobei die Öffnung (4) in der Mitte jeder Fläche (2a, 2b) der Platte (2) angeordnet ist.

3. Verwendung einer Unterlegscheibe nach Anspruch 1 oder Anspruch 2, wobei die Vorsprünge (3a, 3b) in einem Winkel zwischen etwa 80 Grad und etwa 100 Grad zur Platte (2) aufrecht stehen.

4. Verwendung einer Unterlegscheibe nach einem der vorhergehenden Ansprüche, wobei die Seiten jedes Vorsprungs (3a, 3b), die am weitesten von der die Öffnung (4) schneidenden Linie entfernt sind, zueinander konvergieren.

5. Verwendung einer Unterlegscheibe nach einem der vorhergehenden Ansprüche, wobei mindestens einer der Vorsprünge (3a, 3b) einstückig mit der Platte (2) ausgebildet ist.

6. Verwendung einer Unterlegscheibe nach einem der vorhergehenden Ansprüche, wobei mindestens einer der Vorsprünge (3a, 3b) am Umfang der Fläche der Platte (2) angeordnet ist.

7. Verwendung einer Unterlegscheibe nach einem der vorhergehenden Ansprüche, wobei die Unterlegscheibe (1) als Rohling ausgebildet ist und die Vorsprünge (3a, 3b) vor der Verwendung an Biegelinien, die durch die Linie definiert sind, an der die Platte (2) auf die Vorsprünge (3a, 3b) trifft, zueinander gebogen werden.

8. Verwendung einer Unterlegscheibe nach einem der vorhergehenden Ansprüche, wobei die Basis jedes Vorsprungs (3a, 3b) länglich oder quadratisch ist und jeder Vorsprung (3a, 3b) parallele Seiten aufweist, die im rechten Winkel zu der Linie verlaufen.

9. Verwendung einer Unterlegscheibe nach einem der vorhergehenden Ansprüche, wobei die Basis jedes Vorsprungs (3a, 3b) länglich oder quadratisch ist und die entsprechenden Seiten an jedem Vorsprung (3a, 3b) parallel zueinander verlaufen.

10. Verwendung einer Unterlegscheibe nach einem der vorhergehenden Ansprüche, wobei zwei oder mehr Öffnungen (4) vorhanden sind, wobei jede Öffnung (4) für den Eingriff eines Bolzens (7) durch sie hindurch vorgesehen ist und die Vorsprünge (3a, 3b) auf einer Linie angeordnet sind, die die Mitte von mindestens einer der Öffnungen (4) schneidet.

11. Verwendung einer Unterlegscheibe nach einem der vorhergehenden Ansprüche, wobei die Unterlegscheibe (1) aus Metall hergestellt ist.

12. Erdbearbeitungszinken, umfassend eine Unterlegscheibe (1), die mit der Rückseite des Erdbearbeitungszinkens (6), welche eine furchenartige Ausnehmung aufweist, in Eingriff steht, wobei die Unterlegscheibe (1) aus einem einzigen Teil hergestellt ist und eine im wesentlichen flache Platte (2) mit zwei gegenüberliegenden Flächen (2a, 2b) und mit einer Öffnung (4) zum Eingriff eines Bolzens (7) durch diese hindurch umfasst, wobei die Platte (2) zwei Vorsprünge (3a, 3b) aufweist, wobei die Vorsprünge (3a, 3b) auf einer Linie positioniert sind, die die Mitte der Öffnung (4) schneidet, und auf gegenüberliegenden Seiten der Öffnung (4) positioniert sind, wobei die Vorsprünge (3a, 3b) von derselben Fläche der Platte abstehen, wobei die Vorsprünge (3a, 3b) mit der furchenartigen Ausnehmung eines Zinkens (6) in Eingriff stehen, mit dem die Unterlegscheibe (1) in Kontakt ist.
